# FASCICULE DE BREVET EUROPEEN

(11) **EP 4 286 998 B1**
(45) Date de publication et mention de la délivrance du brevet: **25.03.2026**
(21) Numéro de dépôt: 23174071.3
(22) Date de dépôt: 17.05.2023
(51) Int. Cl.: G06F 3/038, G06F 3/16, G06Q 10/101

(54) **FUSION D'INTERACTIONS MULTIMODALES MULTI-UTILISATEURS**
FUSION VON MULTIMODALEN MEHRBENUTZERINTERAKTIONEN
MULTI-USER MULTI-MODAL INTERACTION FUSION

(30) Priorité: 31.05.2022 FR 2205197
(43) Date de publication de la demande: 06.12.2023
(73) Titulaire: Orange, 92130 Issy-les-Moulineaux (FR)
(72) Inventeur: GUIONNET, Chantal, 92326 CHATILLON CEDEX (FR); JOUCLA, Hélène, 92326 CHATILLON CEDEX (FR)
(74) Mandataire: Plasseraud IP

(56) Documents cités:
- WO-A1-2012/066557
- US-A1- 2012 047 574
- US-A1- 2018 046 851

## Description

### Domaine technique

La présente divulgation relève du domaine des interactions homme-machine.

Plus particulièrement, la présente divulgation se rapporte à un procédé de traitement d'une requête d'un service numérique, à un programme informatique comprenant des instructions pour exécuter un tel procédé, et à un terminal pour la mise en œuvre d'un tel procédé.

### Technique antérieure

La multimodalité dans les services numériques actuels permet de proposer aux utilisateurs d'un service d'interagir avec celui-ci en utilisant une ou plusieurs modalités parmi l'ensemble des modalités gérées par le service. Ainsi pour les interactions entrantes l'utilisateur peut choisir par exemple le tactile ou le vocal pour émettre ses demandes.

Dans des services numériques plus évolués, des procédés de fusion des modalités d'interactions permettent de faire coopérer plusieurs modalités d'interactions en même temps pour un même et unique transfert d'information, c'est-à-dire une commande de l'utilisateur, et ceci en prenant en compte différents types de coopération de modalités, telles que la complémentarité, la redondance, ou la concurrence.

Ces modalités d'interactions peuvent être un geste, l'appui sur des touches, le vocal, le regard, ... Il est connu, dans des services numériques actuels, d'interpréter certaines modalités, et de décider de les fusionner ou non pour en déduire une commande entière unique, ou plusieurs commandes séparées, à exécuter.

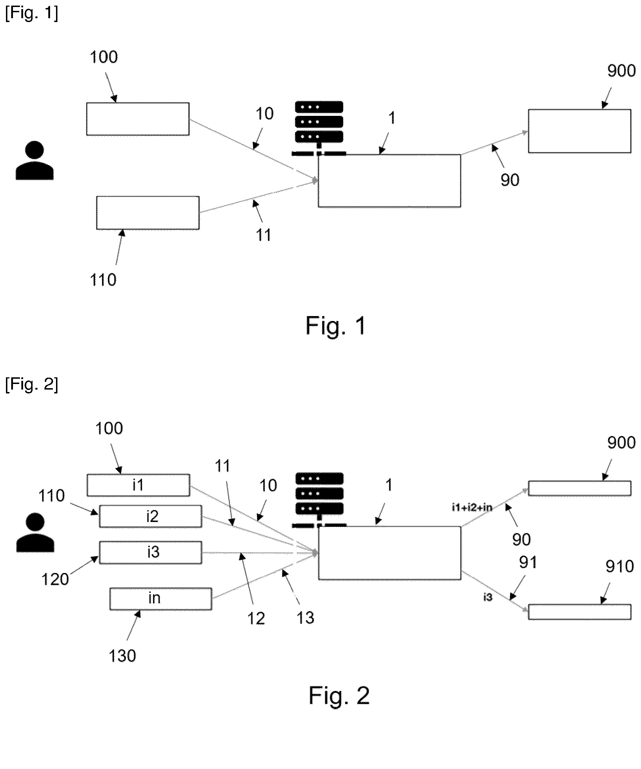

Par exemple, comme illustré sur la figure 1, un utilisateur peut donner une instruction vocale 100 d'allumer une lampe, et en même temps donner une instruction par geste 110 en tendant son bras en direction de la lampe du salon. Un module d'interprétation d'interactions entrantes 1, au sein du service numérique, fusionne ces deux interactions, reçues de deux interfaces d'entrée 10, 11 pour décider une action unique d'allumer la lampe du salon seule. Cette action est exprimée sous la forme d'une commande 900 émise à travers une interface de sortie 90.

Ainsi, comme illustré sur la figure 2, il est connu de prévoir un module d'interprétation d'interactions entrantes 1 qui permet de collecter différentes modalités 100, 110, 120, 130 issues d'un unique utilisateur et reçues par exemple par une pluralité d'interfaces d'entrée 10, 11, 12, 13. Le module d'interprétation d'interactions entrantes 1 est capable de combiner certaines interactions entrantes et de décider d'actions distinctes à mettre en œuvre par l'émission de commandes indépendantes 900, 910 à travers des interfaces de sortie 90, 91.

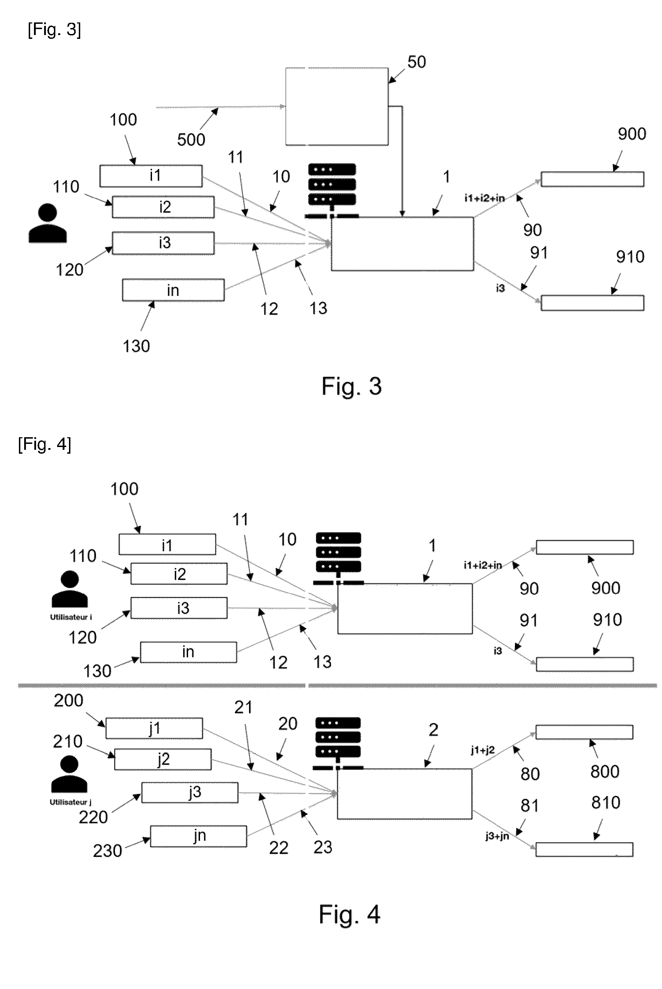

Comme illustré sur la figure 3, l'analyse d'interactions entrantes directes peut, dans certains services numériques, être enrichie d'informations contextuelles 50 issues de précédentes interactions 500 directes ou indirectes. On entend par interaction indirecte une détection par un service numérique d'une information liée à l'utilisateur sans que ce dernier ne soit conscient de cette interaction: il s'agit par exemple d'une détection de présence dans une pièce, d'une détection de jambe dans le plâtre, le niveau de bruit, de luminosité, ...

Le traitement de la coopération de modalités entrantes issues d'un même utilisateur avec le procédé de fusion est une opération assez complexe du fait que chaque individu est unique et donc interagit différemment, selon le contexte, même en utilisant les mêmes modalités d'interactions pour une même commande.

De ce fait dans les services numériques actuels, chaque interaction entrante directe, aussi nommée interaction entrante intentionnelle, c'est-à-dire émise dans l'intention de déclencher une commande, est associée dans un cas simple à une seule commande. Même dans les cas plus complexes, où une requête est formulée par une coopération de modalités entrantes, cette coopération est individuelle et locale.

C'est-à-dire que, comme illustré sur la figure 4, la coopération est associée à un unique utilisateur, qui est l'auteur de l'ensemble des modalités considérées, et à un unique lieu, qui correspond à l'endroit où se trouve cet utilisateur.

En d'autres termes, lorsque des premières modalités entrantes sont identifiées comme émanant d'un premier utilisateur et des deuxièmes modalités entrantes sont identifiées comme émanant d'un deuxième utilisateur distinct du premier utilisateur notamment au moyen d'un module d'identification (non illustré) recevant les premières et deuxièmes modalités entrantes, il est connu de fournir un premier module d'interprétation 1 pour interpréter les modalités entrantes émanant d'un premier utilisateur et un deuxième module d'interprétation 2 pour interpréter les modalités entrantes émanant d'un deuxième utilisateur, les deux modules d'interprétation fonctionnant de manière séparée et indépendante. Chaque module d'interprétation est dédié à l'interprétation de requêtes exprimées par un utilisateur spécifique et utilise pour ce faire un ensemble donné d'interfaces d'entrée et de sortie.

Ainsi, selon la figure 4, le premier module d'interprétation 1 reçoit en entrée, depuis des interfaces d'entrée 10, 11, 12, 13, différentes premières interactions entrantes 100, 110, 120, 130 avec différentes premières modalités, les interprète et émet en sortie des commandes 900, 910 à travers des interfaces de sortie 90, 91. De manière analogue, le deuxième module d'interprétation 2 reçoit en entrée, depuis des interfaces d'entrée 20, 21, 22, 23, différentes deuxièmes interactions entrantes 200, 210, 220, 230 avec différentes deuxièmes modalités, les interprète et émet en sortie des commandes 800, 810 à travers des interfaces de sortie 80, 81.

Les documents de l'art antérieur US 2018/046851 A1 et WO 2012/066557 A1 décrivent des d'interactions multi-modales multi-utilisateurs.

Or il existe un besoin pour un environnement interactif capable d'interagir simplement, de manière naturelle et ergonomique, non pas avec un seul utilisateur à la fois, mais avec plusieurs utilisateurs collectivement. Il serait également souhaitable qu'un tel environnement interactif soit compatible avec une répartition de ses utilisateurs sur différents sites.

### Résumé

La présente divulgation vient améliorer la situation.

Il est proposé un procédé de traitement d'une requête d'un service numérique dans un environnement interactif, le procédé comprenant :
générer une requête enrichie en fonction d'une interprétation de signaux reçus d'un ensemble multimodal d'interactions homme-machine résultant des interactions homme-machine issues d'actions coordonnées d'une pluralité d'utilisateurs distincts dans l'environnement interactif, chaque interaction homme-machine, considérée individuellement, étant indicative seulement d'une requête simple, la requête enrichie déclenchant une émission d'au moins une commande.

Le procédé proposé permet d'améliorer l'ergonomie du service numérique car il offre une prise en compte efficace d'interactions multimodales liées issues d'utilisateurs distincts. Il contribue ainsi à renforcer un comportement naturel et spontané de la part des utilisateurs du service numérique.

L'expression « environnement interactif » désigne un ensemble d'interfaces homme-machine permettant l'interaction entre le service numérique et ses utilisateurs.

Ces interfaces homme-machine comprennent des interfaces d'entrée et de sortie. Les interfaces d'entrée englobent par exemple un clavier, un système de pointage et/ou un écran tactile. Les interfaces de sortie peuvent inclure par exemple un écran ou encore une sortie son couplée à un module de synthèse vocale. Un visiocasque est un exemple de terminal comprenant un ensemble de capteurs de mouvement en tant qu'interface d'entrée et un dispositif d'affichage en tant qu'interface de sortie.

Une caméra couplée à un module de reconnaissance automatique de gestes, ou une interface utilisant la voix comme organe d'entrée couplée avec un module de reconnaissance automatique de la parole, sont d'autres exemples d'interfaces d'entrée. L'environnement interactif peut être ainsi par exemple intégré à une application de visioconférence utilisant les interfaces d'entrée audio et vidéo des participants à une réunion. Dans ce contexte, le service numérique peut s'appuyer sur l'environnement interactif pour interpréter automatiquement différents types de signaux correspondant à des instructions fournies conjointement par les participants. Ces signaux peuvent par exemple désigner un geste d'un premier participant, une instruction orale d'un deuxième participant, une interaction d'un troisième participant avec un bouton, etc.

Une requête dite « simple » présente un caractère individuel en ce qu'elle peut être déterminée à partir d'une seule interaction homme-machine émanant d'un unique utilisateur. A l'inverse, une requête dite « enrichie » présente un caractère conjoint en ce qu'elle ne peut être déterminée qu'à partir d'une pluralité d'interactions homme-machine émanant, collectivement, d'utilisateurs distincts. Le procédé proposé comprend une détection que des utilisateurs distincts sont à l'origine des signaux reçus.

En considérant par exemple une requête enrichie visant à envoyer un e-mail à un groupe d'utilisateurs, un titre de l'e-mail peut être automatiquement proposé sur la base de l'analyse d'une interaction directe, par exemple textuelle ou vocale, émanant d'un premier utilisateur, tandis que le contenu de l'e-mail peut être déterminé sur la base de l'analyse d'une autre interaction émanant d'un second utilisateur. Ainsi, une requête enrichie est élaborée à partir de deux requêtes simples émanant de deux utilisateurs distincts.

Le procédé peut en outre comprendre une interprétation des signaux reçus déterminant la requête enrichie en fonction d'au moins un des éléments suivants : - de requêtes simples extraites des signaux reçus ; - pour chacun des signaux reçus, des utilisateurs à l'origine des signaux reçus ; - du résultat d'une détection que des utilisateurs distincts sont à l'origine des signaux reçus. L'interprétation peut être mise en œuvre par une entité logique, nommée ici analyseur ou module d'interprétation des signaux. L'analyseur peut en outre comporter plusieurs modules élémentaires interprétant chacun exclusivement des signaux qui auraient préalablement été associés à un utilisateur identifié en tant que source desdits signaux par le module d'identification évoqué. L'analyseur permet à un générateur de générer une ou plusieurs requêtes enrichies. Cette ou de ces requêtes enrichies déclenchent automatiquement des commandes correspondant à cette ou ces requêtes.

Dans un exemple, le procédé comporte une identification, pour chaque signal reçu, d'un utilisateur à l'origine du signal reçu..

L'identification peut être une partie de l'interprétation d'un signal reçu, par exemple des signaux vocaux peuvent être analysés pour retrouver une empreinte vocale d'une personne. L'identification peut aussi être fondée sur un identifiant d'utilisateur à l'origine d'un signal reçu, il peut par exemple s'agir d'une adresse IP identifiant un utilisateur connecté individuellement au service numérique. L'identification permet d'interpréter différemment un signal donné en fonction de l'utilisateur identifié comme étant à l'origine de ce signal. Par exemple, une requête enrichie peut être formulée à partir à la fois d'un premier signal indiquant une proposition d'envoyer un fichier aux utilisateurs intéressés et d'une série de deuxièmes signaux issus d'utilisateurs distincts manifestant chacun leur intérêt pour la proposition. Une série de commandes « envoyer le fichier à X » peut ainsi être émise, où X désigne chaque utilisateur identifié associé à au moins un deuxième signal.

En outre, lorsque plusieurs signaux reçus sont chacun associé à un utilisateur identifié, l'interprétation d'une combinaison desdits signaux reçus peut être effectuée en fonction de l'identification des utilisateurs qui en sont à l'origine. Ainsi, une fusion de modalités entrantes peut être opérée différemment selon que ces modalités entrantes sont issues d'un seul utilisateur identifié ou de plusieurs utilisateurs identifiés distincts. En particulier, il peut être considéré un exemple où plusieurs modalités liées émanant d'un même utilisateur identifié, contribuent, avec une ou plusieurs modalités supplémentaires émanant d'un ou plusieurs utilisateurs identifiés distincts, à la génération, par un générateur, d'une requête enrichie. Pour déterminer, dans cet exemple, que les modalités émanant d'un même utilisateur identifié sont liées, il est possible par exemple de se baser sur un historique de modalités émanant de cet utilisateur identifié et d'en extraire une habitude de coordination temporelle constituant une caractéristique propre à cet utilisateur identifié.

Dans un exemple, l'un au moins desdits signaux comporte un identifiant d'utilisateur et générer la requête enrichie comporte au moins une des étapes suivantes : - générer la requête enrichie en fonction de l'interprétation des signaux reçus et des identifiants d'utilisateur associés, - générer la requête enrichie en adaptant, en fonction des identifiants d'utilisateur, la requête enrichie obtenue par l'interprétation des signaux reçus.

Dans un exemple, l'un au moins desdits signaux comporte une information contextuelle et la génération de la requête enrichie adapte la requête enrichie en fonction d'une interprétation de cette information contextuelle.

En considérant par exemple une requête enrichie visant à allumer une lampe parmi un ensemble de lampes, l'identification exacte de la lampe à allumer peut être effectuée sur la base d'un bas niveau de luminosité détecté dans une zone donnée. Le bas niveau de luminosité est ici un exemple d'information contextuelle qui vient implicitement compléter une requête enrichie formulée par fusion de modalités entrantes et qui contribue ainsi à l'interprétation des signaux reçus et à l'adaptation de la requête enrichie par le service numérique.

En considérant par exemple un utilisateur situé dans un environnement bruyant, il peut être prévu d'isoler la voix de l'utilisateur du bruit ambiant afin de ne prendre en compte en tant qu'instructions vocales potentielles de l'utilisateur que ses propres paroles et non celles d'une éventuelle autre personne, située à proximité de l'utilisateur mais n'étant pas elle-même un utilisateur du service numérique. Le niveau sonore ambiant est ici un exemple d'information contextuelle associé à une interface d'entrée recevant une interaction homme-machine. Cet élément est interprété, dans ce cas précis, pour discriminer les signaux reçus par cette interface d'entrée et ainsi, de manière plus générale, adapter la ou les requêtes enrichies issues de la coordination de modalités entrantes.

L'isolement des sons issus de chaque utilisateur peut aussi permettre par exemple de trouver une pluralité de sons issus d'une pluralité d'utilisateurs utilisant le même capteur sonore attaché à la même interface d'entrée. En d'autres termes, il est possible d'isoler, dans un flux audio entrant, plusieurs sons susceptibles de renfermer chacun une requête simple tout en identifiant l'auteur de chacun des sons isolés, en vue de la génération de la requête enrichie.

Une information contextuelle peut être associée à un utilisateur et peut désigner par exemple une préférence ou caractéristique propre à l'utilisateur, ou encore une interaction indirecte de l'utilisateur avec le service numérique. Une information contextuelle associée à une interface d'entrée peut désigner par exemple une caractéristique propre à un terminal et indépendante de l'utilisateur, c'est-à-dire commune aux signaux reçus par l'interface d'entrée depuis ce terminal, et ce que ces signaux émanent d'un utilisateur unique ou au contraire de plusieurs utilisateurs distincts. De manière générale, une information contextuelle est une donnée numérique utilisable comme aide à l'interprétation d'une interaction directe de l'utilisateur avec le service numérique.

Les données numériques évoquées dans les exemples ci-dessus, c'est-à-dire l'identifiant d'utilisateur et l'information contextuelle, ne sont pas nécessairement incluses directement dans un ou plusieurs signaux reçus mais peuvent plus généralement être obtenues de toute manière techniquement envisageable, que ce soit notamment par une transmission distincte ou par une détermination, par exemple par l'interprétation des signaux reçus, une telle détermination pouvant être mise en œuvre localement, ou de manière centralisée, ou encore à l'aide de moyens informatiques en nuage.

Dans un exemple, le procédé proposé comprend en outre horodater des instants au moins de début de réceptions desdits signaux, interpréter des écarts temporels entre les instants de début de réceptions respectives desdits signaux, et adapter la requête enrichie en fonction de l'interprétation de ces écarts temporels.

La coordination temporelle de modalités liées, telles qu'une instruction gestuelle couplée à une instruction vocale, varie d'un utilisateur à l'autre. Ces différences sont susceptibles de porter aussi bien sur la durée de chaque modalité en fonction de l'utilisateur qui la met en œuvre que sur la synchronisation des modalités. En dépit de ces différences, il est possible de définir un seuil en-deçà duquel deux modalités, notamment deux modalités différentes, au moins en ce qu'elles sont issues d'utilisateurs distincts, sont réputées liées, c'est-à-dire se rapportant à la génération de la même requête enrichie. A titre de variante, il est possible d'associer un écart temporel entre le début de modalités d'interaction entrantes à un niveau de probabilité que ces modalités soient liées. Ainsi, une même commande finale peut être obtenue à partir d'une combinaison d'un signal indicatif d'une instruction gestuelle avec un signal indicatif d'une instruction vocale, indépendamment de l'utilisateur auteur de chaque instruction.

Par exemple, au moins une partie desdits signaux reçus peut être issue d'une pluralité d'interfaces d'entrée réparties sur des sites différents.

Ainsi, le procédé proposé permet à des utilisateurs répartis sur différents sites, et disposant chacun d'au moins une interface d'entrée, d'agir de manière coordonnée pour formuler leurs intentions. Les signaux reçus par les interfaces d'entrée traduisent ces intentions associées à des utilisateurs distincts. Ces signaux combinés sont utilisés par le service numérique pour formuler une requête enrichie correspondant aux intentions des utilisateurs et émettre la commande correspondant à la requête enrichie formulée.

Par exemple, le procédé proposé peut comporter en outre :
horodater des instants au moins de début de réceptions desdits signaux,
corriger des instants de début de réceptions respectives desdits signaux en fonction d'une latence entre lesdits sites,
interpréter des écarts temporels corrigés entre des instants horodatés corrigés, et adapter la requête enrichie en fonction de l'interprétation des écarts temporels corrigés.

Ainsi, le procédé proposé prend en compte la latence dans une communication entre différents sites. En synchronisant les référentiels temps de chaque utilisateur, le procédé proposé permet une meilleure identification de modalités coordonnées comme étant liées.

Selon un autre aspect, il est proposé un programme informatique comportant des instructions pour la mise en œuvre du procédé proposé, lorsque lesdites instructions sont exécutées par un processeur.

Selon un autre aspect, il est proposé un dispositif de traitement d'une requête d'un service numérique dans un environnement interactif, le dispositif de traitement comprenant au moins un générateur d'une requête enrichie en fonction d'une interprétation de signaux reçus d'un ensemble multimodal d'interactions homme-machine résultant des interactions homme-machine issues d'actions coordonnées d'une pluralité d'utilisateurs distincts dans l'environnement interactif, chaque interaction homme-machine, considérée individuellement, étant indicative seulement d'une requête simple, la requête enrichie déclenchant une émission d'au moins une commande.

Le dispositif de traitement peut comporter en outre un analyseur apte à interpréter des signaux reçus déterminant la requête enrichie en fonction d'au moins un des éléments suivants :
- de requêtes simples extraites des signaux reçus ;
- pour chacun des signaux reçus, des utilisateurs à l'origine des signaux reçus.

Le dispositif de traitement peut comporter en outre un identificateur d'utilisateur apte à identifier, pour chaque signal reçu un utilisateur à l'origine du signal reçu.

Le dispositif de traitement peut être implémenté par exemple dans au moins un dispositif parmi les suivants :
- un terminal,
- un gestionnaire d'objets connectés apte à commander au moins un objet connecté à un réseau de communication au moyen d'au moins une commande correspondant à la requête enrichie à destination d'au moins un objet connecté.

Par exemple, le dispositif de traitement peut comprendre un circuit de traitement comprenant une mémoire de stockage stockant le programme informatique proposé et un processeur raccordé à la mémoire de stockage et à une ou plusieurs interfaces du terminal.

Alternativement, le dispositif de traitement peut être dénué d'un tel circuit de traitement, qui est alors déporté et configuré pour échanger avec le dispositif de traitement par le biais d'un canal de communication.

### Brève description des dessins

D'autres caractéristiques, détails et avantages apparaîtront à la lecture de la description détaillée ci-après, et à l'analyse des dessins annexés, sur lesquels :
**Fig. 1**
   [Fig. 1] illustre un traitement connu d'une requête découlant d'actions émanant d'un unique utilisateur d'un service numérique, où deux modalités d'interaction sont fusionnées pour construire une commande.
**Fig. 2**
   [Fig. 2] illustre une variante connue du traitement de la figure 1, où plusieurs modalités d'interaction sont traitées pour construire plusieurs commandes.
**Fig. 3**
   [Fig. 3] illustre une variante connue du traitement de la figure 2, où des données contextuelles sont prises en compte pour interpréter une ou plusieurs interactions entrantes.
**Fig. 4**
   [Fig. 4] illustre côte à côte deux traitements identiques connus selon la figure 1. Les traitements concernent chacun un utilisateur unique et sont effectués de manière totalement isolée l'un de l'autre, chaque traitement relatif à un utilisateur distinct découlant uniquement d'interactions dont cet utilisateur est à l'origine et construisant une commande distincte.
**Fig. 5**

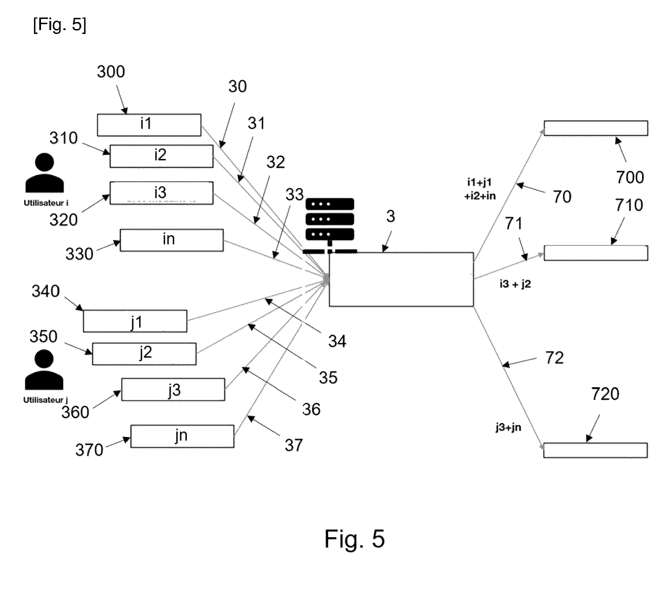

   [Fig. 5] illustre un traitement de requêtes découlant d'actions coordonnées de plusieurs utilisateurs d'un service numérique, selon un exemple de réalisation.
**Fig. 6**

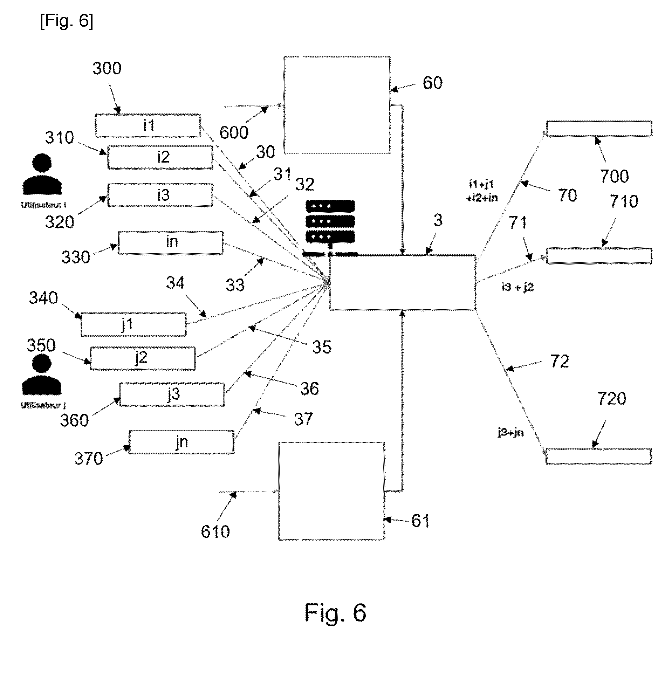

   [Fig. 6] illustre une variante du traitement de la figure 5, où des données contextuelles sont prises en compte pour interpréter une ou plusieurs interactions entrantes.
**Fig. 7**

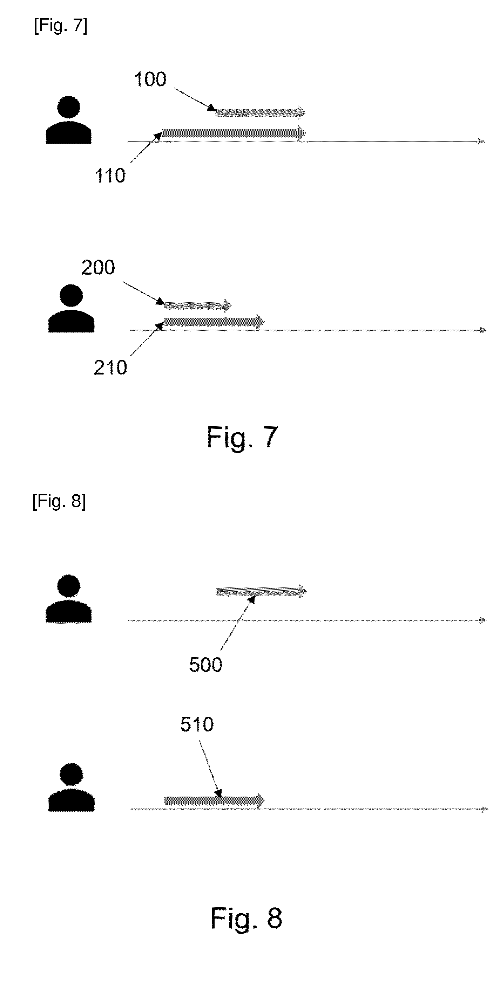

   [Fig. 7] illustre les différences de coordination de modalités liées pour une requête individuelle donnée en fonction de leur auteur.
**Fig. 8**
   [Fig. 8] illustre un exemple de coordination de modalités liées pour une requête collective donnée.
**Fig. 9**

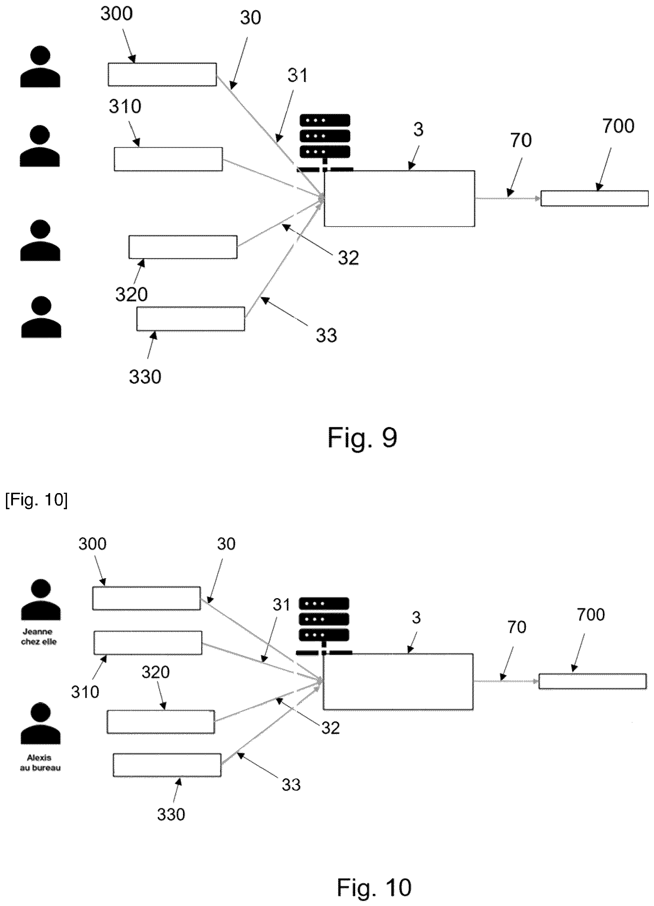

   [Fig. 9] illustre un exemple particulier de traitement de modalités d'interaction particulières, selon le principe général de la figure 5, pour construire une commande particulière.
**Fig. 10**
   [Fig. 10] illustre un autre exemple particulier de traitement de modalités d'interaction particulières, toujours selon le principe général de la figure 5, pour construire une commande particulière.

### Description des modes de réalisation

Le principe de la présente invention est de permettre à plusieurs utilisateurs d'interagir ensemble, chacun selon la ou les modalité(s) de son choix, avec un service numérique.

Pour ce faire, un service numérique gère une ou plusieurs interfaces d'entrée apte à recueillir des signaux se rapportant à un groupe d'utilisateurs, notamment les utilisateurs sont des abonnés au service numérique. Les utilisateurs peuvent indifféremment être tous dans un même lieu ou au contraire dans des endroits éloignés les uns des autres. La composition du groupe d'utilisateurs est gérée par le service numérique lui-même selon ses propres règles et ses propres contextes. Dans un exemple, il peut s'agir des habitants d'une maison, utilisant un service numérique de domotique. Dans un autre exemple, il peut s'agir d'un ensemble de personnes participant à une réunion à l'aide d'un service numérique de visioconférence.

Chaque interface d'entrée est configurée pour collecter un ou plusieurs signaux se rapportant à un ou plusieurs utilisateurs, de sorte que l'ensemble des signaux collectés forme un ensemble multimodal d'interactions entre des utilisateurs distincts et le service numérique.

Le gestionnaire de service numérique comprend un détecteur, prévu pour détecter que les utilisateurs à l'origine des signaux reçus sont distincts. Le détecteur peut comprendre un identificateur d'utilisateur pour identifier les utilisateurs à l'origine des signaux reçus. Une telle détection ou identification peut être indifféremment effectuée avant ou après la réception des signaux.

Il existe de nombreuses manières possibles d'opérer une telle détection ou identification.

Par exemple, il est possible d'obtenir directement, au niveau de l'interface d'entrée, des données permettant d'identifier les utilisateurs à l'origine de différents signaux reçus. De telles données sont désignées dans ce document sous l'expression générique d'« identifiant d'utilisateur ». Il peut s'agir par exemple d'identifiants de comptes d'utilisateur dans le cas où chaque utilisateur dispose d'un compte propre pour bénéficier du service numérique.

Alternativement, plusieurs signaux reçus peuvent être extraits par exemple d'un même flux audio ou vidéo. Il peut être prévu une analyse individuelle des signaux extraits pour identifier les utilisateurs qui en sont à l'origine. Il peut aussi être prévu une analyse comparative des signaux extraits à l'aide d'un algorithme ad hoc pour détecter que les utilisateurs à l'origine des signaux extraits sont distincts, sans nécessairement identifier les utilisateurs en question.

Une localisation physique est un autre exemple de donnée pouvant être associée à un signal reçu et pouvant être utilisée, au moins dans certains cas, dans le même but de détecter que les utilisateurs à l'origine de différents signaux sont distincts, là encore sans nécessairement permettre de formellement identifier, à elle seule, un utilisateur donné.

Alternativement, il est envisageable que des données permettant d'identifier les utilisateurs à l'origine de différents signaux reçus soient comparées entre elles, et que seul le résultat de la comparaison soit obtenu au niveau d'une interface d'entrée du service numérique. Il est ainsi possible de détecter que différents signaux reçus proviennent non pas d'un unique utilisateur mais au contraire d'utilisateurs distincts en se basant seulement sur le résultat de la comparaison et sans qu'il soit pour autant nécessaire que le gestionnaire de service numérique identifie les utilisateurs.

Le service numérique est capable d'interpréter les signaux collectés en y détectant une coopération de modalités d'interactions entrantes directes, successives ou simultanées, issues de plusieurs utilisateurs. De cette manière, le service numérique est en mesure de générer une requête enrichie émanant de plusieurs utilisateurs à partir d'une fusion de modalités d'interactions contenant chacune une requête simple qui est un fragment de cette requête enrichie. Une fois la requête collective générée, une commande entière correspondante est émise par le service numérique à travers une interface de sortie.

De manière générale et selon le principe exposé, la présente invention offre un enrichissement de l'expérience utilisateur par des possibilités de coordination à plusieurs même à distance, d'entraide, et par une meilleure inclusivité potentielle de différents profils d'utilisateurs. Ainsi, une commande entrante enrichie, voire explicite, aussi nommé commande entrante entière ou complète, peut être indifféremment formulée à l'aide d'une ou plusieurs modalités d'interactions, exprimées par un ou plusieurs utilisateurs. La commande entrante est dite explicite si la fusion des requêtes permet de lever une ou plusieurs ambiguïté(s) relatif à l'une des dites requêtes simples, par exemple une commande vocale d'un premier utilisateur telle que « allumer la lumière » pourra être ambiguë, mais sa fusion avec une requête d'un deuxième utilisateur résultant d'un geste de ce deuxième utilisateur montrant une lampe aboutira à une commande d'allumage de la lampe désignée qui est donc explicite. Néanmoins, si la lampe dispose d'un variateur de lumière, la commande n'est alors pas explicite puisqu'aucune requête simple permet de déterminer le niveau d'intensité lumineuse attendu, il s'agit alors d'une commande enrichie mais non explicite.

Les applications de la multimodalité d'interaction entre plusieurs utilisateurs et un service numérique sont multiples, autant dans le domaine public que dans le domaine professionnel. Par exemple, une application possible dans le domaine du travail est de déclencher des commandes issues de plusieurs personnes en réunion, que ce soit en présentiel ou à distance. Une application possible dans le domaine de la sécurité est d'imposer des interactions synchronisées et multimodales de plusieurs acteurs pour une même commande. Une application possible dans le monde du handicap est d'assister plusieurs utilisateurs en situation contrainte ou de leur permettre de coopérer pour déclencher ensemble une commande.

Il est à présent fait référence à la figure 5, qui illustre une architecture logique d'un gestionnaire de service numérique selon un exemple de réalisation de l'invention.

Le gestionnaire de service numérique est entendu comme désignant au moins un circuit de traitement comprenant un processeur, une mémoire de stockage, au moins une interface d'entrée et au moins une interface de sortie. Le gestionnaire de services numériques peut être implémenté, par exemple, au niveau du terminal et/ou au niveau d'un gestionnaire d'objets connectés apte à commander au moins un objet connecté à un réseau de communication au moyen d'au moins une commande correspondant à la requête enrichie à destination d'au moins un objet connecté

Des instructions de programme informatique sont stockées sur la mémoire de stockage. Lorsqu'elles sont lues par le processeur, ces instructions ont pour effet que le processeur mette en œuvre un procédé de traitement d'une requête à partir d'un ensemble multimodal d'interactions homme-machine entrantes.

Le gestionnaire de service numérique comprend un générateur (non représenté) d'une requête enrichie. Il s'agit d'un module logique apte à générer une requête enrichie en fonction d'une interprétation de signaux reçus d'un ensemble multimodal d'interactions homme-machine résultant des interactions homme-machine issues d'actions coordonnées d'une pluralité d'utilisateurs distincts dans l'environnement interactif, chaque interaction homme-machine, considérée individuellement, étant indicative seulement d'une requête simple. La requête enrichie déclenche une émission d'une ou plusieurs commandes de sortie à travers une interface de sortie. En amont de ce générateur, le gestionnaire de service numérique peut aussi comprendre un analyseur 3, ou module d'interprétation d'interactions entrantes. Il s'agit d'un module logique configuré pour, traiter des signaux reçus par la ou les interfaces d'entrée. Ces signaux sont indicatifs de l'ensemble multimodal d'interactions homme-machine entrantes.

La ou les interfaces d'entrée participent, du point de vue d'une pluralité d'utilisateurs, à former un environnement interactif.

C'est-à-dire que plusieurs utilisateurs sont chacun en mesure d'agir sur le fonctionnement du service numérique par le biais d'au moins une interface d'entrée.

Par exemple, un élément interactif peut être affiché sur un écran tactile, et il peut être prévu qu'une détection d'une pression d'un utilisateur sur cet élément interactif conduise à la réception d'un signal par une interface d'entrée. Il peut aussi être prévu qu'un utilisateur regarde dans une direction spécifique pour interagir d'une autre manière avec le service numérique, et que la détection de cette direction de regard, par un capteur approprié, conduise à la réception d'un autre signal par une interface d'entrée. Il peut encore être prévu qu'un appareil porté par un utilisateur soit géolocalisé et qu'une localisation particulière de l'appareil entraîne la réception d'un autre signal par une interface d'entrée.

De manière générale, les utilisateurs peuvent être équipés de terminaux qui peuvent par exemple être un ordinateur, un téléphone portable, une montre, un téléviseur, etc. Optionnellement, un utilisateur peut ne pas disposer d'équipement propre, de sorte qu'un même terminal peut être employé par plusieurs utilisateurs, simultanément ou successivement.

Chaque terminal peut comporter une ou plusieurs interfaces homme-machine comme source de signaux transmis à une interface d'entrée associée à l'analyseur 3. Dans ce cas, une interface homme-machine du terminal est, du point de vue de son utilisateur, assimilé à un simple proxy d'une interface d'entrée dans l'environnement interactif. En fonction des interfaces homme-machine qu'il comporte et de son utilisation, un même terminal peut être limité à acquérir un seul type de signal indicatif d'actions d'un seul utilisateur ou peut au contraire acquérir plusieurs signaux ou types de signaux indicatifs d'actions d'un ou plusieurs utilisateurs. Lorsque plusieurs utilisateurs sont à l'origine de différents signaux reçus, il est prévu d'interpréter ces signaux afin de détecter que les utilisateurs qui en sont à l'origine sont distincts. Il est particulièrement approprié d'effectuer une telle interprétation lorsque ces signaux sont reçus par une même interface homme-machine

Au moins un terminal peut être en outre configuré pour recevoir et exécuter une commande issue d'une interface de sortie associée au générateur.

L'invention n'est limitée ni dans le nombre ni dans la nature des interfaces considérées. Il est seulement nécessaire qu'au minimum deux signaux soient reçus, le premier signal reçu étant indicatif d'une interaction homme-machine avec un premier utilisateur selon une première modalité et le deuxième signal reçu étant indicatif d'une interaction homme-machine avec un second utilisateur selon une seconde modalité. Ainsi, à l'aide par exemple d'une seule caméra enregistrant simultanément deux utilisateurs, il est possible de recevoir une piste audio comportant une instruction orale du premier utilisateur et une piste vidéo comportant un mouvement du second utilisateur. La piste audio et la piste vidéo forment ainsi un ensemble de signaux reçus qui est à la fois multimodal et relatif à plusieurs utilisateurs. Dans cet exemple une analyse de la piste vidéo et/ou de la piste audio peut être mise en œuvre afin d'identifier les deux utilisateurs, notamment dans le cas où ils n'interagissent pas avec un terminal connecté les identifiant, ou afin de confirmer une identification des deux utilisateurs dans le cas contraire.

Sur l'exemple de la figure 5, plusieurs interfaces d'entrée 30, 31, 32, 33 reçoivent chacune un signal indicatif d'une interaction homme-machine entrante 300 , 310, 320, 330 d'un même premier utilisateur. D'autres interfaces d'entrée 34, 35, 36, 37 reçoivent chacune un signal d'une interaction homme-machine entrante 340, 350, 360, 370 d'un même second utilisateur. Il est considéré, par souci de simplification, que les modalités des différents signaux reçus sont toutes différentes. Bien entendu, la figure 5 n'est qu'illustrative, et de manière générale plusieurs signaux d'un même ou de plusieurs utilisateurs peuvent être reçus sur de mêmes interfaces.

L'analyseur 3 identifie, parmi les signaux reçus, des interactions homme-machine issues d'actions coordonnées d'une pluralité d'utilisateurs.

Il existe différentes manières d'effectuer une telle identification.

L'identification d'actions coordonnées peut se fonder exclusivement sur des données utiles contenues dans les signaux reçus, c'est-à-dire sans prendre en compte de quelconques métadonnées.

Dans ce cas de figure, l'analyseur 3 n'a pas connaissance du fait que les interactions homme-machine sont du fait d'une pluralité d'utilisateurs. Le traitement des signaux reçus revient donc ici à fusionner différentes modalités d'interaction, indépendamment de l'utilisateur à l'origine de chacune, pour formuler une requête et émettre une commande. En d'autres termes, dans ce cas de figure, une commande résultant d'une fusion de modalités sera toujours déterminée de manière identique par l'analyseur 3, indépendamment du fait que les modalités considérées soient issues d'un unique utilisateur ou au contraire d'une pluralité d'utilisateurs.

Dans un exemple, le gestionnaire de service numérique comporte un identificateur d'utilisateur (non représenté) apte à identifier, pour chaque signal reçu, un utilisateur à l'origine du signal reçu. Cette identification peut s'effectuer au moyen d'une analyse de chaque signal reçu, par reconnaissance vocale par exemple. L'identification d'un signal reçu peut aussi s'effectuer en récupérant un identifiant de l'utilisateur. Notamment, des signaux reçus peuvent contenir un identifiant d'utilisateur. Cela peut être de façon explicite dans le contenu lui-même (format texte, audio, image, ...), ou alors via le canal de transport lui-même associé à un identifiant d'utilisateur (adresse IP par exemple). L'identificateur d'utilisateur a pour effet supplémentaire de permettre au gestionnaire de service numérique de déterminer non seulement si un ensemble de signaux reçus se rapporte à un même utilisateur unique ou au contraire à des utilisateurs distincts.

L'analyseur 3 peut ainsi être configuré pour formuler une requête de manière différenciée selon que la requête est simple ou enrichie.

Comme indiqué sur la figure 5, plusieurs interactions entrantes 300, 310, 330, 340 au sein d'un ensemble multimodal d'interactions homme-machine peuvent être identifiées par l'analyseur 3 comme résultant d'actions coordonnées de plusieurs utilisateurs du service numérique. L'analyseur fusionne ces interactions afin que le générateur génère une requête collective de ces utilisateurs, ou requête enrichie. La requête enrichie ainsi générée déclenche alors la préparation d'une commande 700 correspondant à cette requête collective et cette commande est émise à travers une interface de sortie 70.

De la même manière, l'analyseur 3 peut estimer que, toujours au sein du même ensemble multimodal d'interactions homme-machine, plusieurs autres interactions entrantes 320, 350 résultent aussi d'actions coordonnées et correspondent à une autre requête collective de plusieurs utilisateurs. Dans ce cas, une commande 710est émise distinctement, soit par la même interface de sortie que précédemment, soit par une interface de sortie 71 distincte.

L'analyseur 3 peut aussi estimer que, toujours au sein du même ensemble multimodal d'interactions homme-machine, d'autres interactions entrantes 360, 370, résultent quant à elles d'actions coordonnées d'un seul utilisateur, et correspondent à une requête individuelle de cet utilisateur. Dans ce cas, l'analyseur 3 prépare une commande 720 correspondant à cette requête individuelle et émet cette commande par toute interface de sortie 72 appropriée.

Comme déjà indiqué, la formulation de requêtes collectives ou individuelles, de manière générale, ne nécessite pas nécessairement de prendre en compte de quelconques métadonnées.

Néanmoins, la temporalité d'interactions, leur contexte de réception et l'identification de leurs auteurs sont autant d'exemples de données pouvant être incluses dans les signaux reçus et dont le traitement automatique peut permettre d'affiner la formulation des requêtes et de formuler d'éventuelles requêtes supplémentaires.

Pour présenter simplement ces différentes données et la manière dont leur traitement peut influencer la formulation de requêtes, on considère à présent un exemple particulier de modalités et de requête enrichie formulée qui en découle.

Dans cet exemple particulier, un premier utilisateur demande verbalement d'allumer le chauffage dans une pièce, tandis qu'un second utilisateur fait un geste en direction d'un radiateur. Un micro enregistre un flux audio contenant la demande du premier utilisateur et une caméra enregistre un flux vidéo contenant la demande du second utilisateur. Ces deux flux sont reçus par une interface d'entrée et traités par l'analyseur 3.

En l'absence de données supplémentaires, l'analyseur 3 est seulement en mesure de formuler grossièrement une requête consistant à activer un système de chauffage dans une pièce, sans pour autant savoir précisément quelle pièce. L'analyseur 3 peut optionnellement surmonter cette difficulté en invitant un ou plusieurs des utilisateurs à préciser leur requête, par exemple en nommant la pièce ou en la sélectionnant parmi une liste de suggestions.

Les informations contextuelles sont un type particulier de données supplémentaires dont le traitement automatique peut influencer la formulation de requêtes. Ainsi, l'un au moins des signaux reçus peut comporter une information contextuelle 60 qui est interprétée par l'analyseur 3 pour affiner la formulation d'une requête.

En poursuivant l'exemple particulier, il est possible de considérer que la localisation de la caméra filmant le second utilisateur est préalablement connue. Cette localisation peut prendre par exemple la forme d'un identifiant d'une pièce, qui est préalablement associé, dans une base de données de sources de signaux reçus, à un identifiant de la caméra.

Ainsi, l'interprétation, par l'analyseur 3, d'un signal reçu contenant le flux vidéo et l'identifiant de la caméra, peut comprendre une interaction avec la base de données de sources de signaux reçus sur la base de l'identifiant de la caméra contenu dans le signal reçu.

Une telle interaction peut permettre à l'analyseur 3 d'obtenir l'identifiant de la pièce où les utilisateurs souhaitent obtenir, collectivement, une activation du chauffage. L'identifiant de la pièce peut donc être utilisé pour compléter la requête enrichie, ici plus spécifiquement en identifiant correctement un ou plusieurs dispositifs de chauffage particuliers à activer. En complément, la direction du bras tendu d'un utilisateur, telle qu'analysable dans le flux vidéo entrant, est une forme de requête simple permettant d'identifier un dispositif de chauffage particulier à activer et contribuant ainsi à générer la requête enrichie comme la fusion de deux requêtes simples, l'une sous forme de signal vocal, l'autre sous forme de signal gestuel.

De manière générale, une information contextuelle 60 telle que représentée dans la figure 6 peut être relative à un ou plusieurs aspects parmi le niveau sonore, la luminosité, la température ou tout autre paramètre se rapportant à une caractéristique quelconque d'un utilisateur, de son environnement, ou d'une source de données utilisée par l'utilisateur et servant à acquérir un ou plusieurs signaux reçus par l'analyseur 3.

Ainsi définies, des informations contextuelles 60, 61 obtenues par l'analyseur 3 traduisent un ensemble d'interactions indirectes 600, 610 avec le service numérique, par opposition à des interactions directes qui sont, elles, manifestées intentionnellement par les utilisateurs.

Les utilisateurs étant distincts et leurs emplacements au moment des interactions étant aussi potentiellement différents, différents signaux reçus peuvent naturellement contenir des informations contextuelles différentes.

Contrairement aux dispositifs et procédés connus mettant en œuvre des fusions de modalités issues d'un unique utilisateur, il est utile ici que l'analyseur 3 puisse intégrer des informations contextuelles 60, 61 différenciées par utilisateur, ce afin de pouvoir interpréter correctement les contextes d'obtention de différentes modalités issues d'utilisateurs distincts.

Les profils d'utilisateur sont un autre type particulier de données supplémentaires dont le traitement automatique peut influencer la formulation de requêtes.

II peut aussi être prévu un d'utiliser un historique de requêtes, notamment fourni à l'analyseur 3, et/ou généré par l'analyseur 3 lui-même notamment en conservant en mémoire tout ou partie des signaux et requêtes associées.

Un historique de requêtes peut par exemple comporter :
d'une part des ensembles de signaux reçus, chacun comportant au moins un signal correspondant à une action d'un utilisateur et ayant permis de formuler au moins une requête, et
d'autre part, pour chaque ensemble de signaux reçus, une ou plusieurs commandes émises en aval sur la base de la requête formulée.

L'analyseur 3 peut être configuré pour rechercher, dans un tel historique, des signaux similaires à l'un des signaux couramment reçus, et pour consulter, pour chacun de ces signaux présents dans l'historique, les commandes effectivement émises en aval.

Une telle démarche, dont la mise en œuvre pratique implique l'entraînement d'une intelligence artificielle selon des principes généraux connus, peut permettre d'affiner la formulation d'une requête, par exemple en choisissant de reprendre ou d'adapter des formulations spécifiques de requêtes ayant déjà été employées par le passé à partir de signaux reçus similaires.

Le procédé peut aussi prévoir d'obtenir un élément d'un profil associé à un utilisateur ayant généré une des interactions homme-machine et/ou à au moins une interface d'entrée recevant une des interactions homme-machine.

Par exemple, l'historique de requêtes décrit précédemment peut être décliné par utilisateur de manière à personnaliser la prise en compte des requêtes antérieures dans la formulation d'une requête courante.

En reprenant l'exemple précédent de deux utilisateurs émettant la requête collective de chauffer une pièce, l'analyseur 3 peut aussi obtenir ou inférer des goûts ou préférences de l'un au moins des utilisateurs concernés de manière à affiner la formulation de la requête en optant par exemple pour une température personnalisée dans la pièce.

De manière générale, un élément de profil d'utilisateur désigne toute forme d'interaction passée, directe ou indirecte, entre l'utilisateur et le service numérique, qui soit interprétable par l'analyseur 3 pour affiner la formulation d'une requête.

L'identifiant de l'utilisateur, déjà évoqué, est un exemple particulier d'un élément de profil d'utilisateur. Une utilisation potentielle d'un identifiant de l'utilisateur dans ce contexte peut être de compléter la formulation d'une requête vague. Par exemple, au cours d'une réunion en visioconférence, un exemple de requête émanant des présentateurs, automatiquement identifiés par leurs identifiants d'utilisateurs, peut être de mettre en sourdine les microphones des autres participants à la visioconférence. Les identifiants d'utilisateurs des présentateurs permettent à l'analyseur d'affiner la formulation de la requête et de déduire par élimination la liste des participants dont les microphones doivent être mis en sourdine.

La temporalité des interactions, qui peut englober par exemple la durée de chaque interaction ou l'écart temporel entre les débuts de deux interactions, est un élément supplémentaire susceptible d'affecter la détection d'interactions liées et la formulation des requêtes.

La prise en compte de cette temporalité est d'autant plus complexe que chaque utilisateur n'agit pas avec la même rapidité ou la même précision.

Prenons l'exemple d'une commande pour allumer la lampe de salon détectée par la coopération des deux modalités d'interactions suivantes :
En vocal : « allume la lampe »
Par la gestuelle : le bras tendu de l'utilisateur vers la lampe du salon.

La fusion seule de ces deux modalités d'interactions permet de définir la commande à réaliser.

Or un utilisateur peut être plus rapide qu'un autre, avec une coordination des modalités liées différente, pour autant la commande à retrouver est bien la même. Ce phénomène est illustré sur la figure 7, où la durée et la synchronisation des modalités liées 100, 110 issues d'un premier utilisateur sont différentes de celles 200, 210 issues d'un second utilisateur. Les modalités 100, 200 sont vocales tandis que les modalités 200, 210 sont gestuelles. Elles sont représentées sur la figure 7 sous la forme de flèches temporelles, une modalité débutant à un instant correspondant à l'origine de la flèche et s'achevant à un instant ultérieur correspondant à la pointe de la flèche. Bien que les deux modalités mises en œuvre par des utilisateurs distincts n'aient pas la même durée ni la même synchronisation, la commande finale attendue est identique dans les deux cas.

Des modalités issues de plusieurs utilisateurs en parallèle ne doivent pas nécessairement être prises en compte par l'analyseur 3 de la même manière que des modalités liées issues d'un utilisateur unique.

En effet, les répétitions de modalités d'interaction par un même utilisateur ne sont pas l'équivalent de modalités d'interactions identiques issues de plusieurs utilisateurs. Dans le premier cas, on a une notion de redondance ou insistance, alors que dans le second cas il s'agit d'une même implication ou d'une demande partagée par plusieurs.

Par exemple, comme représenté sur la figure 8, lorsque deux utilisateurs réalisent en même temps, ou de manière rapprochée dans le temps, les deux modalités 500, 510 en coopération : en vocal « allume la lampe » et avec le geste du bras tendu vers la lampe de la salle de réunion, cela ne signifie pas d'allumer deux fois cette lampe, mais de l'allumer une seule fois, et comme cela est souhaité par deux personnes, cela peut en plus signifier une insistance ou un vrai besoin partagé.

Par exemple, les signaux reçus comportant l'information vocale d'un utilisateur et l'information gestuelle d'un autre utilisateur peuvent chacun comprendre au moins un horodatage de début d'interaction et optionnellement un horodatage de fin d'interaction ou de manière équivalente une durée de l'interaction.

De manière générale, par une interprétation de signaux horodatés, notamment par une interprétation d'écarts temporels entre le début ou la fin d'une interaction et le début ou la fin d'une autre interaction, il est possible de déterminer par exemple si ces interactions sont superposées, rapprochées ou éloignées dans le temps, et sur cette base de déterminer si ces interactions sont liées ou non.

Le temps est aussi un élément essentiel dans la détermination du type de coopération entre plusieurs modalités d'interactions, notamment la complémentarité ou la redondance. De la sorte, le traitement par l'analyseur 3 des instants horodatés relatifs à des interactions liées offre la possibilité d'interpréter une modalité d'interaction donnée compte tenu d'une autre modalité d'interaction qui la précède.

En considérant plusieurs modalités d'interaction liées, la première modalité d'interaction, sur le plan temporel, peut par exemple définir une requête initiale d'un utilisateur, éventuellement incomplète, tandis que chaque suivante vient en affiner la signification pour la transformer en une requête collective impliquant plusieurs utilisateurs distincts. Ainsi, la prise en compte de la temporalité des interactions, et notamment de leur ordre, par l'analyseur 3 contribue à reconstituer le cheminement logique des utilisateurs et ainsi à retranscrire fidèlement certaines requêtes collectives.

Lorsque les signaux reçus proviennent de sites différents parce que les utilisateurs sont eux-mêmes situés sur des sites différents, alors il est possible que la latence entre ces sites ait une incidence sur les écarts temporels. Dans ce cas, il peut être prévu de synchroniser les référentiels temps par rapport à un même événement quelconque (par exemple suite à un événement provoqué tel qu'un ping) dans chaque référentiel temps. Cette synchronisation peut conduire à corriger des horodatages effectués séparément au niveau de chaque site avant de procéder à l'interprétation des signaux horodatés.

A l'inverse, le traitement d'une fusion issue de modalités d'interactions de plusieurs utilisateurs peut mettre en commun pour plusieurs commandes une des modalités issues d'un des utilisateurs à combiner avec chacune des modalités des autres utilisateurs. Par exemple dans une même pièce, lorsqu'un utilisateur dit « allume ces lampes », tandis qu'un second utilisateur pointe la lampe au plafond, et qu'un troisième pointe la lampe sur la table, deux commandes doivent être issues de la fusion des trois modalités, à savoir une première commande pour allumer la lampe au plafond et une seconde commande pour allumer la lampe sur la table.

Deux exemples particuliers d'applications de l'invention sont à présent décrits.

Dans un premier exemple particulier illustré sur la figure 9, Pierre est en réunion avec ses collègues. Avec son pointeur laser, il pointe sur un des noms de fichier affichés sur la diapositive en cours et dit « lancer ce fichier ». Le service fusionne les deux modalités d'interactions « nom écrit au tableau et pointé » et le vocal « lance ce fichier », et en déduit la commande « lancer le fichier xxx », xxx étant lu sur le tableau à l'aide d'une caméra qui détecte le nom visé.

La semaine suivante, alors que Patrick s'est cassé le bras il est chez lui pour participer à la réunion à distance. Son collègue, présent à la réunion, manipule le pointeur laser, et le dirige vers le fichier à montrer en même temps que Pierre dit « lancer ce fichier ». Cette fois-ci le service fusionne les 2 modalités d'interactions différentes issues des 2 utilisateurs de la réunion pour en déduire la commande entière « lancer le fichier xxx ».

A la fin de la réunion il ajoute à l'oral : « envoyer le fichier par mail à ceux qui le souhaitent » pendant que son collègue pointe à nouveau sur le nom de fichier. Une partie des personnes lèvent la main, d'autres lancent un « oui moi » ou « oui je veux bien ». Le service détecte, grâce aux flux vidéo des différentes caméras de PC connectés à distance ou présentes dans la pièce, les mains levées des différents utilisateurs. Le service numérique détecte aussi, grâce aux microphones des ordinateurs connectés et grâce au microphone et à la caméra de la salle de réunion, les personnes qui ont communiqué un équivalent de « oui » quelle que soit la modalité.

Le service fusionne ainsi les modalités d'interactions entrantes directes issues du groupe des participants de la réunion et en déduit la commande d'envoi du fichier pointé à la liste des personnes ayant répondu d'une façon ou d'une d'autre par l'affirmative.

Dans un second exemple particulier illustré sur la figure 10, Jeanne et Alexis utilisent un outil numérique d'aménagement de leur future maison. Jeanne dit « mets ça » puis avec son doigt clique sur un objet présent sur l'écran, et Alexis enchaine en disant « ici » et en cliquant avec son doigt sur un emplacement du plan de la maison. Ce soir ils sont ensemble dans le salon, mais demain ils pourront continuer leur aménagement numérique, lui de son travail, elle de la maison, tout en gardant les mêmes possibilités de coopérations des modalités d'interactions.

## Revendications

1. Procédé de traitement d'une requête d'un service numérique dans un environnement interactif, le procédé comprenant : générer une requête enrichie en fonction d'une interprétation de signaux reçus d'un ensemble multimodal d'interactions homme-machine résultant des interactions homme-machine (300, 310, 320, 330, 340, 350, 360, 370) issues d'actions coordonnées d'une pluralité d'utilisateurs distincts dans l'environnement interactif, chaque interaction homme-machine, considérée individuellement, étant indicative seulement d'une requête simple, chaque requête simple étant un fragment de la requête enrichie, la requête enrichie déclenchant une émission d'au moins une commande correspondante (700, 710), **caractérisé en ce que** le procédé comprend en outre:
détecter que des utilisateurs distincts sont à l'origine des signaux reçus.

2. Procédé selon la revendication 1, dans lequel le procédé comprend une interprétation des signaux reçus déterminant la requête enrichie en fonction d'au moins un des éléments suivants :
- de requêtes simples extraites des signaux reçus ;
- pour chacun des signaux reçus, des utilisateurs à l'origine des signaux reçus ;
- du résultat d'une détection que des utilisateurs distincts sont à l'origine des signaux reçus.

3. Procédé selon l'une des revendications 1 à 2, dans lequel le procédé comprend une identification, pour chaque signal reçu, d'un utilisateur à l'origine du signal reçu.

4. Procédé selon l'une des revendications précédentes, dans lequel l'un au moins desdits signaux comporte un identifiant d'utilisateur et générer la requête enrichie comporte au moins une des étapes suivantes :
générer la requête enrichie en fonction de l'interprétation des signaux reçus et des identifiants d'utilisateur associés, et
générer la requête enrichie en adaptant, en fonction des identifiants d'utilisateur, la requête enrichie obtenue par l'interprétation des signaux reçus.

5. Procédé selon l'une des revendications précédentes, dans lequel, lorsque l'un au moins desdits signaux comporte une information contextuelle (50), la génération de la requête enrichie adapte la requête enrichie en fonction d'une interprétation de cette information contextuelle.

6. Procédé selon l'une des revendications précédentes, comportant en outre :
horodater des instants au moins de début de réceptions desdits signaux,
interpréter des écarts temporels entre les instants de début de réceptions respectives desdits signaux, et
adapter la requête enrichie en fonction de l'interprétation de ces écarts temporels.

7. Procédé selon l'une des revendications précédentes, dans lequel au moins une partie desdits signaux reçus est issue d'une pluralité d'interfaces d'entrée (30, 31, 32, 33, 34, 35, 36, 37) réparties sur des sites différents.

8. Procédé selon la revendication **7,** comportant en outre :
horodater des instants au moins de début de réceptions desdits signaux,
corriger des instants de début de réceptions respectives desdits signaux en fonction d'une latence entre lesdits sites,
interpréter des écarts temporels corrigés entre des instants horodatés corrigés, et adapter la requête enrichie en fonction de l'interprétation des écarts temporels corrigés.

9. Programme informatique comportant des instructions pour la mise en œuvre du procédé de traitement selon l'une des revendications 1 à 8, lorsque lesdites instructions sont exécutées par un processeur.

10. Dispositif de traitement d'une requête d'un service numérique dans un environnement interactif , le dispositif de traitement comprenant au moins : un générateur d'une requête enrichie en fonction d'une interprétation de signaux reçus d'un ensemble multimodal d'interactions homme-machine résultant des interactions homme-machine (300, 310, 320, 330, 340, 350, 360, 370) issues d'actions coordonnées d'une pluralité d'utilisateurs distincts dans l'environnement interactif, chaque interaction homme-machine, considérée individuellement, étant indicative seulement d'une requête simple, chaque requête simple étant un fragment de la requête enrichie, la requête enrichie déclenchant une émission d'au moins une commande correspondante (700, 710), **caractérisé en ce que** le dispositif comprend en outre un détecteur apte à détecter que des utilisateurs distincts sont à l'origine des signaux reçus.

11. Dispositif de traitement selon la revendication 10, dans lequel le dispositif de traitement comporte un analyseur (3) apte à interpréter des signaux reçus déterminant la requête enrichie en fonction d'au moins un des éléments suivants :
- de requêtes simples extraites des signaux reçus ;
- pour chacun des signaux reçus, des utilisateurs à l'origine des signaux reçus.

12. Dispositif de traitement selon la revendication 11, dans lequel le dispositif de traitement comporte un identificateur d'utilisateur apte à identifier, pour chaque signal reçu un utilisateur à l'origine du signal reçu.

13. Dispositif de traitement selon l'un quelconque des revendication 10 à 12, dans lequel le dispositif de traitement est implémenté dans au moins un dispositif parmi les suivants :
- un terminal,
- un gestionnaire d'objets connectés apte à commander au moins un objet connecté à un réseau de communication au moyen d'au moins une commande correspondant à la requête enrichie à destination d'au moins un objet connecté.

## Patentansprüche

1. Verfahren zur Verarbeitung einer Anforderung eines digitalen Dienstes in einer interaktiven Umgebung, wobei das Verfahren umfasst:
Erzeugen einer erweiterten Anforderung in Abhängigkeit von einer Interpretation von Signalen, die von einem multimodalen Satz von Mensch-Maschine-Interaktionen empfangen werden, die aus den Mensch-Maschine-Interaktionen (300, 310, 320, 330, 340, 350, 360, 370) resultieren, die aus koordinierten Aktionen einer Mehrzahl von verschiedenen Benutzern in der interaktiven Umgebung hervorgegangen sind, wobei jede Mensch-Maschine-Interaktion, einzeln betrachtet, nur eine einfache Anforderung angibt, wobei jede einfache Anforderung ein Fragment der erweiterten Anforderung ist, wobei die erweiterte Anforderung ein Senden mindestens eines entsprechenden Befehls (700, 710) auslöst, **dadurch gekennzeichnet, dass** das Verfahren ferner umfasst:
Detektieren, dass verschiedene Benutzer ursächlich für die empfangenen Signale sind.

2. Verfahren nach Anspruch 1, wobei das Verfahren eine Interpretation der empfangenen Signale umfasst, die die erweiterte Anforderung in Abhängigkeit von mindestens einem der folgenden Elemente bestimmt:
- einfache Anforderungen, die aus den empfangenen Signalen extrahiert werden;
- für jedes der empfangenen Signale Benutzer, die ursächlich für die empfangenen Signale sind;
- Ergebnis einer Detektion, dass verschiedene Benutzer ursächlich für die empfangenen Signale sind.

3. Verfahren nach einem der Ansprüche 1 bis 2, wobei das Verfahren eine Identifizieren, für jedes empfangene Signal, eines Benutzers, der ursächlich für das empfangene Signal ist, umfasst.

4. Verfahren nach einem der vorhergehenden Ansprüche, wobei mindestens eines der Signale eine Benutzerkennung umfasst und das Erzeugen der erweiterten Anforderung mindestens einen der folgenden Schritte umfasst:
Erzeugen der erweiterten Anforderung in Abhängigkeit von der Interpretation der empfangenen Signale und von den zugeordneten Benutzerkennungen, und
Erzeugen der erweiterten Anforderung, indem die durch die Interpretation der empfangenen Signale erhaltene erweiterte Anforderung in Abhängigkeit von den Benutzerkennungen angepasst wird.

5. Verfahren nach einem der vorhergehenden Ansprüche, wobei, wenn mindestens eines der Signale eine Kontextinformation (50) umfasst, das Erzeugen der erweiterten Anforderung die erweiterte Anforderung in Abhängigkeit von einer Interpretation dieser Kontextinformation anpasst.

6. Verfahren nach einem der vorhergehenden Ansprüche, umfassend ferner:
Zeitstempeln der Zeitpunkte mindestens für den Empfangsbeginn der Signale,
Interpretieren der zeitlichen Abweichungen zwischen den jeweiligen Empfangsbeginnzeitpunkten der Signale, und Anpassen der erweiterten Anforderung in Abhängigkeit von der Interpretation dieser zeitlichen Abweichungen.

7. Verfahren nach einem der vorhergehenden Ansprüche, wobei mindestens ein Teil der empfangenen Signale aus einer Mehrzahl von Eingabeschnittstellen (30, 31, 32, 33, 34, 35, 36, 37) hervorgegangen ist, die auf verschiedene Standorte verteilt sind.

8. Verfahren nach Anspruch 7, umfassend ferner:
Zeitstempeln der Zeitpunkte mindestens für den Empfangsbeginn der Signale,
Korrigieren der jeweiligen Empfangsbeginnzeitpunkte der Signale in Abhängigkeit von einer Latenz zwischen den Standorten,
Interpretieren der korrigierten zeitlichen Abweichungen zwischen korrigierten zeitgestempelten Zeitpunkten und Anpassen der erweiterten Anforderung in Abhängigkeit von der Interpretation der korrigierten zeitlichen Abweichungen.

9. Computerprogramm, das Anweisungen umfasst, die bei der Ausführung der Anweisungen durch einen Prozessor das Verfahren zur Verarbeitung nach einem der Ansprüche 1 bis 8 durchführen.

10. Vorrichtung zur Verarbeitung einer Anforderung eines digitalen Dienstes in einer interaktiven Umgebung, wobei die Vorrichtung zur Verarbeitung mindestens umfasst:
einen Erzeuger einer erweiterten Anforderung in Abhängigkeit von einer Interpretation von Signalen, die von einem multimodalen Satz von Mensch-Maschine-Interaktionen empfangen werden, die aus den Mensch-Maschine-Interaktionen (300, 310, 320, 330, 340, 350, 360, 370) resultieren, die aus koordinierten Aktionen einer Mehrzahl von verschiedenen Benutzern in der interaktiven Umgebung hervorgegangen sind, wobei jede Mensch-Maschine-Interaktion, einzeln betrachtet, nur eine einfache Anforderung angibt, wobei jede einfache Anforderung ein Fragment der erweiterten Anforderung ist, wobei die erweiterte Anforderung ein Senden mindestens eines entsprechenden Befehls (700, 710) auslöst, **dadurch gekennzeichnet, dass** die Vorrichtung ferner einen Detektor umfasst, der in der Lage ist zu detektieren, dass verschiedene Benutzer ursächlich für die empfangenen Signale sind.

11. Vorrichtung zur Verarbeitung nach Anspruch 10, wobei die Vorrichtung zur Verarbeitung einen Analysator (3) umfasst, der in der Lage ist, empfangene Signale zu interpretieren, was die erweiterte Anforderung in Abhängigkeit von mindestens einem der folgenden Elemente bestimmt:
- einfache Anforderungen, die aus den empfangenen Signalen extrahiert werden;
- für jedes der empfangenen Signale Benutzer, die ursächlich für die empfangenen Signale sind.

12. Vorrichtung zur Verarbeitung nach Anspruch 11, wobei die Vorrichtung zur Verarbeitung einen Benutzeridentifikator umfasst, der in der Lage ist, für jedes empfangene Signal einen Benutzer zu identifizieren, der ursächlich für das empfangene Signal ist.

13. Vorrichtung zur Verarbeitung nach einem der Ansprüche 10 bis 12, wobei die Vorrichtung zur Verarbeitung in mindestens eine Vorrichtung unter den folgenden implementiert ist:
- ein Endgerät,
- einen Verwalter von verbundenen Objekten, der in der Lage ist, mindestens ein mit einem Kommunikationsnetzwerk verbundenes Objekt mittels mindestens eines der erweiterten Anforderung entsprechenden Befehls zu steuern, der an mindestens ein verbundenes Objekt gerichtet ist.

## Claims

1. Method for processing a request for a digital service in an interactive environment, the method comprising:
generating an enriched request as a function of an interpretation of signals received from a multimodal set of human-machine interactions resulting from the human-machine interactions (300, 310, 320, 330, 340, 350, 360, 370) arising from coordinated actions of a plurality of distinct users in the interactive environment, each human-machine interaction, considered individually, being indicative only of a simple request, each simple request being a fragment of the enriched request, the enriched request triggering a transmission of at least one corresponding command (700, 710), **characterized in that** the method further comprises:
detecting that distinct users are originating the received signals.

2. Method according to Claim 1, wherein the method comprises an interpretation of the received signals determining the enriched request as a function of at least one of the following elements:
- simple requests extracted from the received signals;
- for each of the received signals, users originating the received signals;
- the result of a detection that distinct users are originating the received signals.

3. Method according to either of Claims 1 and 2, wherein the method comprises an identification, for each received signal, of a user originating the received signal.

4. Method according to any of the preceding claims, wherein at least one of said signals comprises a user identifier and generating the enriched request comprises at least one of the following steps:
generating the enriched request as a function of the interpretation of the received signals and of the associated user identifiers, and
generating the enriched request by adapting, as a function of the user identifiers, the enriched request obtained by the interpretation of the received signals.

5. Method according to any of the preceding claims, wherein, when at least one of said signals comprises contextual information (50), the generation of the enriched request adapts the enriched request according to an interpretation of this contextual information.

6. Method according to any of the preceding claims, further comprising:
time stamping at least start times of receptions of said signals,
interpreting time differences between the start times of respective receptions of said signals, and
adapting the enriched request according to the interpretation of these time differences.

7. Method according to any of the preceding claims, wherein at least a part of said received signals comes from a plurality of input interfaces (30, 31, 32, 33, 34, 35, 36, 37) distributed over different sites.

8. Method according to Claim 7, further comprising:
time stamping at least start times of receptions of said signals,
correcting instants at which respective receptions of said signals start as a function of a latency between said sites,
interpreting corrected time differences between corrected time-stamped instants, and adapting the enriched request according to the interpretation of the corrected time differences.

9. Computer program comprising instructions for the implementation of the processing method according to any of Claims 1 to 8, when said instructions are executed by a processor.

10. Device for processing a request for a digital service in an interactive environment, the processing device comprising at least:
one generator of an enriched request as a function of an interpretation of signals received from a multimodal set of human-machine interactions resulting from the human-machine interactions (300, 310, 320, 330, 340, 350, 360, 370) arising from coordinated actions of a plurality of distinct users in the interactive environment, each human-machine interaction, considered individually, being indicative only of a simple request, each simple request being a fragment of the enriched request, the enriched request triggering a transmission of at least one corresponding command (700, 710), **characterized in that** the device further comprises a detector capable of detecting that distinct users are originating the received signals.

11. Processing device according to Claim 10, wherein the processing device comprises an analyser (3) capable of interpreting received signals determining the enriched request as a function of at least one of the following elements:
- simple requests extracted from the received signals;
- for each of the received signals, users originating the received signals.

12. Processing device according to Claim 11, wherein the processing device comprises a user identifier capable of identifying, for each received signal, a user originating the received signal.

13. Processing device according to any of Claims 10 to 12, wherein the processing device is implemented in at least one of the following devices:
- a terminal,
- a connected object manager capable of controlling at least one object connected to a communication network by means of at least one command corresponding to the enriched request intended for at least one connected object.
